Europäisches Patentamt

European Patent Office

Office européen des brevets

(19)

(11) Publication number: 0 284 216 B1

(12) EUROPEAN PATENT SPECIFICATION

(45) Date of publication of patent specification: 15.04.92   (51) Int. Cl.⁵: F16H 61/00

(21) Application number: 88301681.8

(22) Date of filing: 26.02.88

(54) Valve assembly for an automatic transmission.

(30) Priority: 23.03.87 US 29057

(43) Date of publication of application:
28.09.88 Bulletin 88/39

(45) Publication of the grant of the patent:
15.04.92 Bulletin 92/16

(84) Designated Contracting States:
DE FR GB IT

(56) References cited:
GB-A- 2 125 121
GB-A- 2 179 712
US-A- 4 083 266
US-A- 4 449 426

(73) Proprietor: GENERAL MOTORS CORPORA-
TION
General Motors Building 3044 West Grand
Boulevard
Detroit Michigan 48202(US)

(72) Inventor: Fuehrer, Reece R.
51 North Road 200E
Danville Indiana 46122(US)
Inventor: Swingler, Peter Edwin
13106 Cheval Court
Carmel Indiana 46032(US)

(74) Representative: Denton, Michael John et al
Patent Section Vauxhall Motors Limited 1st
Floor Gideon House 28 Chapel Street
Luton Bedfordshire LU1 2SE(GB)

## Description

This invention relates to a valve assembly for a fluid-operated automatic transmission as specified in the preamble of claim 1 and disclosed in US-A-4083266.

In prior-art transmissions, interconnecting passages (worm tracks) for hydraulic valving are formed in the casting constituting the transmission housing itself. This surface must be machined, together with the remainder of the casting, and the surface must be maintained relatively flat to ensure against leakage when the valve body is secured thereto. If there is leakage between the worm tracks, due to porosity or insufficiency of material in the raw casting, the entire housing casting must be scrapped.

Further, when there are design improvements in the control valving which involve changes in the worm tracks, either the old-design housing castings must be scrapped, or introduction of the design improvements must be deferred until the old housing castings have been used.

The present invention seeks to overcome these drawbacks associated with prior-art transmissions.

To this end a valve assembly for an automatic transmission in accordance with the present invention is characterised over US-A-4083266 by the features specified in the characterising portion of claim 1.

With a valve assembly in accordance with the present invention, all the passages interconnecting the control valving are formed in a separate plate which is secured to the transmission housing as a cover or closure member. The fluid connections to the transmission components, namely clutches, brakes, fluid pumps and the like, are made by way of single passages formed at the cover plate/housing interface, this interface being easily sealed by means of a conventional gasket.

If machining or casting errors occur solely at the worm tracks, only the cover plate has to be scrapped. Since the fluid connections to the transmission components are made at the passages formed at the interface, the worm track pattern can be changed at any time, and improvements to prior transmission designs can be retro-fitted, if desired. In any event, design improvements can reach the market place much more quickly, and with less expense.

As a further advance in the art, the fluid filters normally disposed on the pump inlet can be mounted directly on the cover plate prior to assembly with the transmission housing (case), as can all of the wiring in an electrical plug connection for the electrical power and sensing elements used for transmission control.

With the present invention, a compact, easily changeable and less expensive valve control plate and cover assembly is made available. Any valving improvements can be immediately incorporated into the production assembly with minimum change-over time, and without changes to the transmission case or transmission components.

The present invention accordingly makes available an improved valve assembly for transmission control wherein a cover plate, removable from the transmission case, has the hydraulic control valve and electrical control components mounted thereon.

The present invention also makes available an improved valve assembly for transmission control wherein the fluid passages interconnecting the control valves are formed in a cover plate on which the control valving is mounted, with the control fluid being delivered to transmission components through openings formed at the interface between the cover plate and the transmission case or housing.

The present invention also makes available an improved valve assembly for transmission control wherein a modulator valve and cover plate assembly is assembled and can be tested prior to installation on a transmission, and wherein the plate portion of the assembly serves as both a transfer plate and a cover for the transmission sump, and further wherein fluid filters for the transmission fluid can be installed on the cover plate prior to assembly.

In the drawing:
Figure 1 is an elevational view of an automatic transmission incorporating a valve assembly in accordance with the present invention; and
Figure 2 is a perspective view of a preferred embodiment of a valve assembly in accordance with the present invention, constituting a cover plate and control assembly.

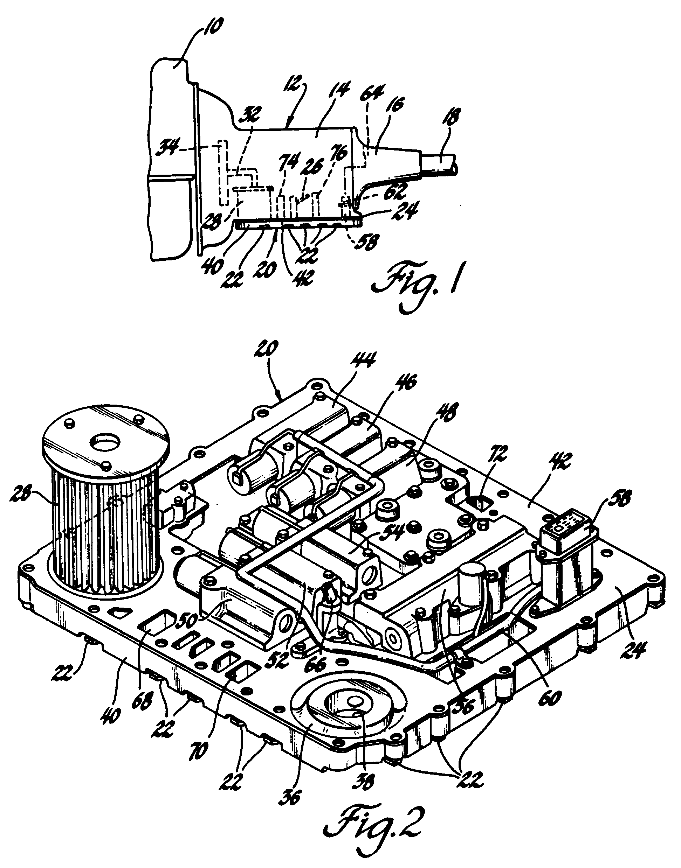

With reference now to the drawing, wherein like characters represent like or corresponding parts in the respective views, there is shown in Figure 1 a prime mover 10, which may be an internal combustion engine, and a conventional automatic ratio-change transmission 12 having a transmission housing formed by a main housing 14 and an output housing 16. The output housing 16 rotatably supports a transmission output shaft 18.

A valve and closure plate assembly generally designated 20 is secured to the main transmission housing 14 by a plurality of threaded fasteners 22. An interface 24 is formed between the assembly 20 and the housing 14. On the housing side of the interface 24, a plurality of passages, such as 26, are formed in the housing 14. These passages lead to various transmission components, such as clutches and brakes.

As is shown in Figure 2, a hydraulic fluid filter 28 is secured to the assembly 20. The filter 28 is fed by a passage 32 connected to a cavity, not shown, in the main housing 14. The cavity, which provides fluid flow to the full perimeter of the filter 28, is connected to a conventional hydraulic pump 34 which is disposed within the housing 14. The assembly 20 also has a second filter cavity 36 for accommodating a low-pressure lube (lubricant) and cooling filter, if desired. This filter has an outlet portion 38 through which fluid passes after having entered the outer surface of the filter. The filter can be constructed similarly to the filter 28.

The valve and closure plate assembly 20 consists of a cover plate 40, an separator plate 42, and a plurality of solenoid-operated control valve assemblies 44, 46, 48, 50, 52, 54 and 56. The valve and closure plate assembly 20 further includes an electrical connector 58 and a wiring bundle 60 which connects the electrical connector 58 to the solenoids of the respective control valves. The electrical connector 58 is connected to an electrical connector 62 disposed within the transmission housing 14. The electrical connector is connected by means of wiring to a plurality of sensors, such as an output speed sensor 64.

If desired, a turbine speed sensor, such as that shown at 66, can be secured to the valve and closure plate assembly 20 and connected by means of wiring to the electrical connector 58. The electrical connector 58 would also be connected to a conventional electronic control mechanism, such as a microprocessor, which would be programmed to provide appropriate shift points and fluid pressure control within the transmission. Other sensor mechanisms, such as sensors for engine torque, system pressure and operating temperature, can also be utilised, and the information obtained therefrom can be sent to the microprocessor.

The cover plate 40 has formed therein a plurality of tortuous paths constituting worm tracks (not shown) which communicate with the control valves 44 to 56 in a conventional and well-known manner. The separator plate 42 controls which of the worm tracks is in communication with each of the individual valve assemblies. The fluid flow and pressure outputs from the control valves must be directed to the various valve elements within the transmission 12 for controlling these elements.

As is well-known, these valve elements comprise fluid-operated clutches and fluid-operated brakes which are selectively engaged to establish appropriate gear ratios in conventional planetary gearing. The fluid flow and pressure established by the control valves are directed through passages, such as 68, 70 and 72, and the interface 24 to passages, such as 74 and 76, formed in the transmission housing. The passages 68, 70 and 72 are protected from leakage to atmosphere by conventional gaskets.

It will be evident from Figure 2 that the valve and closure plate assembly 20 can easily be installed on a test fixture such that fluid pressure can be applied to the system and each of the valve elements can be tested, as can the electrical system, by means of a simple plug connection at the connector 58. Any abnormal valve functioning or control function can be located prior to assembly on the transmission.

It also becomes a relatively simple task to provide various control levels by changing one or more of the valve assemblies 44 to 56. In order to change the entire control system, where it becomes necessary to change the worm tracks (tortuous paths), which are formed in the cover plate 40 only, the casting mould for the cover plate 40 would have to be changed, and also the stamping tools or dies for the separator plate 42 would have to be changed. Complete control function changes can thus be made with relative ease, and inexpensively.

Those familiar with the manufacture of automatic transmissions will be aware of the expense involved in the changing of a conventional type of transmission housing casting where such must be modified in order to change existing worm track patterns of the type which are currently used in automatic transmissions of this kind. This expense is greatly reduced by the use of the present invention.

Another advantage which is available with the present invention is that of transmission sump oil level control. In current transmissions, some of the control valving may extend into the sump oil whenever the oil level is at or above the "Add" mark on the ullage rod. These components may vary in respect of the volume of oil which they displace, and they may therefore affect the oil level reading from transmission to transmission, thus necessitating individual calibration of ullage rods. With the use of the present invention, all the valving components will be below the fluid level whenever the fluid level is at the "Add" or above level, and thus sensitivity of the ullage rod to the oil level range between full and "Add" is removed.

As has already been mentioned, the use of this invention permits modular installation or replacement of the control valve assembly, and provides a single unit for the purpose of mounting the control valves and closing off the transmission housing from atmosphere.

A valve assembly in accordance with the present invention has the potential to reduce scrappage of transmission cases, to improve the maintenance of valves in an automatic transmission, and to eliminate the need for a separate cover or bottom pan for the transmission housing.

## Claims

1. A valve assembly for an automatic transmission, in which the transmission (12) includes a housing (14) with an opening therein, the housing (14) encloses a plurality of hydraulically controlled elements such as fluid-operated friction devices and has formed therein passages (26,74,76) for distributing fluid to the friction devices, and the transmission (12) also includes a plurality of electronic sensors such as speed sensors (64) disposed in the housing (14), the assembly comprising a closure plate (40) for closing the opening in the housing (14), a plurality of fluid passages (68,70,72) formed in the closure plate (40), valve means secured to the closure plate (40) and enclosing the fluid passages (68,70,72) and including a plurality of control valves (44 to 56) for controlling fluid flow in the fluid passages (68,70,72); a plurality of flow transfer passages (68,70,72) in fluid communication with a portion of the fluid passages (68,70,72) for conducting fluid flow as directed by the control valves (44 to 56), the flow transfer passages (68,70,72) being alignable with the passages (26,74,76) in the housing (14); and securing means (22) for securing the valve assembly (20) to the housing (14) to maintain the flow transfer passages (68,70,72) in flow registration with the passages (26,74,76) in the housing (14) to permit controlling of the hydraulically controlled elements and for closing the opening in the housing (14); characterised by a plurality of solenoids for operating the respective control valves (44 to 56) and including a plurality of wires (60) for conducting electrical signals to respective ones of the solenoids, a single multi-contact plug (58) secured to the closure plate (40) and connected to the wires (60), the multi-contact plug (58) being connectible to a mating plug (62) on the housing (14), the securing means (22) maintaining the respective plugs (58,62) in mating connection.

2. A valve assembly according to claim 1, characterised in that the housing (14) also encloses a fluid pump (34), the passages (26,74,76) in the housing (14) are also effective for lubrication and cooling, fluid filter support means (36,38) is formed in the closure plate (20), the assembly (20) includes a separator plate (42), and fluid filter means (28) is disposed in the support means (36,38) for filtering fluid prior to delivery from the fluid pump (34) and after return from lubrication.

## Revendications

1. Ensemble porte-vannes pour une transmission automatique, dans lequel la transmission (12) comporte un carter (14) pourvu d'une ouverture, le carter (14) comportant une série d'éléments à commande hydraulique, tels que des dispositifs de friction commandés par fluide, et étant pourvu de passages (26, 74, 76) façonnés dans ce carter, destinés à distribuer le fluide aux dispositifs de friction, et dans lequel la transmission (12) comporte également une série de capteurs électroniques, tels que des capteurs (64) de vitesse disposés dans le carter (14), l'ensemble comprenant une plaque (40) de fermeture destinée à fermer l'ouverture existant dans le carter (14), une série de passages (68, 70, 72) de fluide façonnés dans la plaque (40) de fermeture, des moyens à vannes fixés sur la plaque (40) de fermeture et incluant les passages (68, 70, 72) de fluide, comprenant aussi une série de vannes de commande (44 à 56) destinées à commander et à réguler le flux de fluide circulant dans les passages (68, 70, 72) de fluide; une série de passages (68, 70, 72) de transfert du flux de fluide, qui sont en communication hydraulique avec une partie des passages (68, 70, 72) de fluide, destinés à conduire le flux de fluide défini par les vannes (44 à 56) de commande, les passages (68, 70, 72) de transfert du flux pouvant être alignés sur les passages (26, 74, 76) réalisés dans le carter (14); et des moyens (22) de fixation destinés à fixer l'ensemble (20) porte-vannes au carter (14) de manière à maintenir les passages (68, 70, 72) de transfert du flux en alignement d'écoulement avec les passages (26, 74, 76) réalisés dans le carter (14), afin de permettre la commande des éléments à commande hydraulique et la fermeture de l'ouverture existant dans le carter (14); caractérisé par une série d'électro-aimants destinés à actionner les vannes de commande correspondantes (44 à 56), et comprenant une série de fils électriques (60) destinés à conduire des signaux électriques aux électro-aimants correspondants, et une seule prise multibroches (58) fixée sur la plaque (40) de fermeture et raccordée aux fils électriques (60), la prise multibroches (58) pouvant être raccordée à une contre-prise (62) située dans le carter (14), les moyens (22) de fixation maintenant les différentes prises (58, 62) en contact mutuel.

2. Ensemble porte-vannes selon la revendication 1, caractérisé en ce que le carter (14) comporte également une pompe (34) à fluide, en ce que les passages (26, 74, 76) réalisés dans le carter (14) servent également au graissage et au refroidissement, en ce que des moyens (36, 38) de support d'un filtre à fluide sont façonnés dans la plaque (20) de fermeture, en ce que l'ensemble (20) comporte une plaque (42) de séparation, et en ce que des moyens (28) de filtration du fluide sont disposés sur les moyens (36, 38) de support pour filtrer le fluide avant qu'il ne soit délivré par la pompe (34) à fluide, et après le retour du fluide du système de graissage.

**Patentansprüche**

1. Ventilanordnung für ein automatisches Getriebe, in welchem das Getriebe (12) ein eine Öffnung umschließendes Gehäuse (14) umfaßt, welches eine Vielzahl von hydraulisch gesteuerten Elementen, wie fluidbetätigte Reibungsvorrichtungen umschließt, wobei im Gehäuse (14) ausgebildete Durchlässe (26,74,76) für die Verteilung von Fluid zu den Reibungsvorrichtungen vorgesehen sind, und das Getriebe (12) auch eine Vielzahl von elektronischen Sensoren, wie Geschwindigkeitssensoren (64), angeordnet in dem Gehäuse (14) enthält, wobei die Anordnung eine Verschlußplatte (40) zum verschließen der Öffnung in dem Gehäuse (14), sowie eine Vielzahl von in der Verschlußplatte (40) ausgebildeten Fluiddurchgängen (68,70,72), an der Verschlußplatte (40) befestigte Ventileinrichtungen, welche die Fluiddurchgänge (68,70,72) umschließen und eine vielzahl von Steuerventilen (44 bis 56) für die Steuerung der Fluidströmung in den Fluiddurchgängen umfaßt; eine Vielzahl von strömungstransferierenden Durchgängen (68,70,72) ist in Fluidverbindung mit einem Teil der Fluiddurchgänge (68,70,72), um Fluidströmung, wie vorgegeben von den Steuerventilen (44 bis 56) zu leiten, wobei die strömungstransferierenden Durchgänge (68,70,72) mit den Durchgängen (26,74,76) im Gehäuse (14) ausrichtbar sind; und Befestigungsmittel (22), zur Befestigung der Ventilanordnung (20) an dem Gehäuse (14), um die strömungstranferierenden Durchgänge (68,70,72) in Strömungsausrichtung mit den Durchgängen (26,74,76) im Gehäuse (14) zu halten, um die Steuerung der hydraulisch gesteuerten Elemente zu gestatten und zum verschließen der Öffnung im Gehäuse (14);
gekennzeichnet durch eine Vielzahl von Solenoiden zur Betätigung der jeweiligen Steuerventile (44 bis 56), wobei eine Vielzahl von Drähten (60) vorgesehen ist, um die elektrischen Signale zu den entsprechenden Solenoiden zu leiten, einem einzelnen Mehrkontaktstecker (58), befestigt an der Verschlußplatte (40) und verbunden mit den Drähten (60), wobei der Mehrkontaktstecker (58) an einen passenden Stecker (62) am Gehäuse (14) anschließbar ist, und die Befestigungsmittel (22), die die jeweiligen Stecker (58,62) in passender Verbindung halten.

2. Eine Ventilanordnung nach Patentanspruch 1 ist gekennzeichnet dadurch, daß das Gehäuse (14) ebenfalls eine Fluidpumpe (34) umschließt, daß die Durchgänge (26,74,76) in dem Gehäuse (14) auch für Schmierung und Kühlung effektiv sind, daß Fluidfilterträgereinrichtungen (36,38) in der Verschlußplatte (20) ausgebildet sind, daß die Anordnung (20) eine Trennplatte (42) umfaßt und daß Fluidfiltereinrichtungen (28), in den Trägereinrichtungen (36,38) zum Filtern des Fluids vor der Abgabe von der Fluidpumpe (34) und nach der Rückführung von der Schmierung angeordnet sind.

Fig. 1

Fig.2